# EUROPEAN PATENT APPLICATION

(11) **EP 4 693 986 A1**
(43) Date of publication of application: **11.02.2026**
(21) Application number: 23929528.0
(22) Date of filing: 31.03.2023
(51) Int. Cl.: H04L 5/00, H04W 52/04

(54) **COMMUNICATION PROCESSING METHOD AND APPARATUS**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2023/085789
(87) International publication number: WO 2024/197945

(57) **Abstract**

The present application relates to the technical field of communications, and provides a communication processing method and apparatus. The method comprises: a terminal device receiving parameter information corresponding to at least one uplink power control parameter identifier respectively associated with a first qnew and/or a second qnew, the first qnew being determined from a first candidate beam reference signal set, and the second qnew being determined from a second candidate beam reference signal set; determining uplink power control parameter information of a first channel and/or a first reference signal and/or a second channel and/or a second reference signal according to parameter information corresponding to a first uplink power control parameter identifier. According to the present application, in the case of M-TRP, a terminal device can determine at least one qnew on the basis of multiple candidate beam reference signal sets, and after it is determined that target channels and/or reference signals use the qnew, the technical solution of uplink power control parameters of the channels and/or reference signals is provided, such that the success rate of TRP-based beam failure recovery can be improved.

## Description

### TECHNICAL FIELD

The disclosure relates to the field of communication technology, in particular to a communication processing method and a communication processing apparatus.

### BACKGROUND

Multi transmission reception point (M-TRP) scenario includes a single-downlink control information (DCI) MTRP scenario and a multi-DCI MTRP scenario. In the case of multi-DCI (M-DCI), each transmission reception point (TRP) sends its own TRP-related transmission resource indication and transmission configuration indication (TCI) state via its own DCI. Each control resource set (CORESET) in a plurality of CORESETs is configured with a CORESET pool index (CORESETPoolIndex), and different CORESETPoolIndexes correspond to different TRPs. Therefore, a default failure detection resource set can be determined according to the TCI states of the CORESETs corresponding to the CORESETPoolIndexes. In the case of single-DCI (S-DCI), one piece of DCI is capable of sending TRP transmission resources and TCIs for a plurality of TRPs. The failure detection resource sets for different TRPs in S-DCI may be configured by a base station explicitly or may be determined by a terminal according to default rules.

For each failure detection resource set, a reference signal identifier (qnew) of a target beam (new beam) can be determined from a corresponding candidate beam reference signal set and used to inform the base station that this new beam can be employed for transmission. However, after some channels and/or reference signals determine which qnew to use, there is still a lack of technical solutions on how to determine uplink power control parameters for these channels and/or reference signals.

### SUMMARY

The disclosure provides a communication processing method and a communication processing apparatus. In the case of M-TRP, a terminal may determine at least one qnew based on a plurality of candidate beam reference signal sets, and after determining the target channels and/or reference signals using this qnew, a technical solution is provided for uplink power control parameters for these channels and/or reference signals provided by the disclosure, which improves a success rate of TRP-based beam failure recovery.

According to a first aspect of embodiments of the disclosure, a communication processing method is provided. The method is performed by a terminal, and includes: receiving parameter information corresponding to at least one uplink power control parameter identifier respectively associated with a first qnew and/or a second qnew, in which the first qnew is determined from a first candidate beam reference signal set, the second qnew is determined from a second candidate beam reference signal set, the first qnew indicates a beam and a path loss reference signal corresponding to a transmission of a first channel and/or a first reference signal, and the second qnew indicates a beam and a path loss reference signal corresponding to a transmission of a second channel and/or a second reference signal; and based on parameter information corresponding to a first uplink power control parameter identifier, determining uplink power control parameter information of at least one of:
the first channel, the first reference signal, the second channel, or the second reference signal.

In some embodiments of the disclosure, the first uplink power control parameter identifier is a minimum uplink power control parameter identifier.

In some embodiments of the disclosure, the method further includes: receiving first configuration information, in which the first configuration information is used for configuring the first candidate beam reference signal set and the second candidate beam reference signal set, the first candidate beam reference signal set corresponds to a first failure detection resource set, and the second candidate beam reference signal set corresponds to a second failure detection resource set.

In some embodiments of the disclosure, the method further includes: receiving indication information, in which the indication information is used for determining a first unified TCI state and a second unified TCI state.

In some embodiments of the disclosure, the first unified TCI state or the second unified TCI state includes at least one of:
a Joint TCI State; a Downlink (DL) TCI State; or an Uplink (UL) TCI State.

In some embodiments of the disclosure, the method further includes: determining the first failure detection resource set and the second failure detection resource set based on at least one of:
receiving second configuration information, in which the second configuration information indicates the first failure detection resource set and the second failure detection resource set; or
determining the first failure detection resource set based on a TCI state of a CORESET corresponding to a first CORESETPoolIndex, and determining the second failure detection resource set based on a TCI state of a CORESET corresponding to a second CORESETPoolIndex, in which at least two CORESETs are configured with different CORESETPoolIndexes.

In some embodiments of the disclosure, the first failure detection resource set includes reference signal resources corresponding to the first unified TCI state, and the second failure detection resource set includes reference signal resources corresponding to the second unified TCI state.

In some embodiments of the disclosure, the indication information includes a medium access control control element (MAC CE), at least one unified TCI state indicated by the MAC CE corresponds to a code point in a TCI state indication field carried in DCI.

In some embodiments of the disclosure, the indication information includes a MAC CE and DCI, the MAC CE indicates at least one unified TCI state respectively corresponding to a plurality of code points corresponding to a TCI state indication field carried in the DCI, and the TCI state indication field carried in the DCI indicates one of the plurality of code points.

In some embodiments of the disclosure, the first channel includes at least one of:
a first physical UL shared channel (PUSCH); or a first physical UL control channel (PUCCH);
the first reference signal includes a first sounding reference signal (SRS);
the second channel includes at least one of:
   a second PUSCH; or a second PUCCH; and
   the second reference signal includes a second SRS.

In some embodiments of the disclosure, an UL power control parameter of the first PUSCH or the second PUSCH includes at least one of:
a first power parameter, a second power parameter or a power control adjustment state of the first PUSCH or the second PUSCH.

In some embodiments of the disclosure, an UL power control parameter of the first PUCCH or the second PUCCH includes at least one of:
a first power parameter or a power control adjustment state of the first PUSCH or the second PUSCH.

In some embodiments of the disclosure, an UL power control parameter of the first SRS or the second SRS includes at least one of:
a first power parameter, or a second power parameter of the first SRS or the second SRS, or a power control adjustment state of the first PUSCH or the second PUSCH.

In some embodiments of the disclosure, the method further includes: sending a scheduling request for beam failure recovery; and/or sending a PUSCH, in which the PUSCH carries an UL MAC CE, and the UL MAC CE indicates the first qnew and/or the second qnew, and at least one of:
an identifier of a first failure detection resource set; an identifier of the first candidate beam reference signal set; a first CORESETPoolIndex; an identifier of a second failure detection resource set; an identifier of the second candidate beam reference signal set; or a second CORESETPoolIndex.

It should be noted that the above embodiments may be implemented independently or in any combination, which is not limited in the embodiment.

According to a second aspect of embodiments of the disclosure, a communication processing method is provided. The method is performed by a network device, and includes: sending parameter information corresponding to at least one UL power control parameter identifier respectively associated with a first qnew and/or a second qnew, in which the first qnew is determined from a first candidate beam reference signal set, the second qnew is determined from a second candidate beam reference signal set, the first qnew indicates a beam and a path loss reference signal corresponding to a transmission of a first channel and/or a first reference signal, and the second qnew indicates a beam and a path loss reference signal corresponding to a transmission of a second channel and/or a second reference signal; in which parameter information corresponding to a first UL power control parameter identifier is used to determine UL power control parameter information of at least one of:
the first channel, the first reference signal, the second channel, or the second reference signal.

In some embodiments of the disclosure, the first UL power control parameter identifier is a minimum UL power control parameter identifier.

In some embodiments of the disclosure, the method further includes: sending first configuration information, in which the first configuration information is used for a terminal to configure the first candidate beam reference signal set and the second candidate beam reference signal set, the first candidate beam reference signal set corresponds to a first failure detection resource set, and the second candidate beam reference signal set corresponds to a second failure detection resource set.

In some embodiments of the disclosure, the method further includes: sending indication information, in which the indication information is used for determining a first unified TCI state and a second unified TCI state.

In some embodiments of the disclosure, the first unified TCI state or the second unified TCI state includes at least one of:
a Joint TCI State; a DL TCI State; or an UL TCI State.

In some embodiments of the disclosure, the method further includes: sending second configuration information, in which the second configuration information indicates the first failure detection resource set and the second failure detection resource set.

In some embodiments of the disclosure, the first failure detection resource set includes reference signal resources corresponding to the first unified TCI state, and the second failure detection resource set includes reference signal resources corresponding to the second unified TCI state.

In some embodiments of the disclosure, the indication information includes a MAC CE, at least one unified TCI state indicated by the MAC CE corresponds to a code point in a TCI state indication field carried in DCI.

In some embodiments of the disclosure, the indication information includes a MAC CE and DCI, the MAC CE indicates at least one unified TCI state respectively corresponding to a plurality of code points corresponding to a TCI state indication field carried in the DCI, and the TCI state indication field carried in the DCI indicates one of the plurality of code points.

In some embodiments of the disclosure, the first channel includes at least one of:
a first PUSCH; or a first PUCCH;
the first reference signal includes a first SRS;
the second channel includes at least one of:
   a second PUSCH; or a second PUCCH; and
   the second reference signal includes a second SRS.

In some embodiments of the disclosure, an UL power control parameter of the first PUSCH or the second PUSCH includes at least one of:
a first power parameter, a second power parameter or a power control adjustment state of the first PUSCH or the second PUSCH.

In some embodiments of the disclosure, an UL power control parameter of the first PUCCH or the second PUCCH includes at least one of:
a first power parameter or a power control adjustment state of the first PUCCH or the second PUCCH.

In some embodiments of the disclosure, an UL power control parameter of the first SRS or the second SRS includes at least one of:
a first power parameter or a second power parameter of the first SRS or the second SRS, or a power control adjustment state of the first PUSCH or the second PUSCH.

In some embodiments of the disclosure, the method further includes: receiving a scheduling request for beam failure recovery; and/or receiving a PUSCH, in which the PUSCH carries an UL MAC CE, and the UL MAC CE indicates the first qnew and/or the second qnew, and at least one of:
an identifier of a first failure detection resource set; an identifier of the first candidate beam reference signal set; a first CORESETPoolIndex; an identifier of a second failure detection resource set; an identifier of the second candidate beam reference signal set; or a second CORESETPoolIndex.

It should be noted that the above embodiments may be implemented independently or in any combination, which is not limited in the embodiment.

According to a third aspect of embodiments of the disclosure, a communication processing apparatus is provided. The apparatus is applied to a terminal, and includes: a first communication module, configured to receive parameter information corresponding to at least one UL power control parameter identifier respectively associated with a first qnew and/or a second qnew, in which the first qnew is determined from a first candidate beam reference signal set, the second qnew is determined from a second candidate beam reference signal set, the first qnew indicates a beam and a path loss reference signal corresponding to a transmission of a first channel and/or a first reference signal, and the second qnew indicates a beam and a path loss reference signal corresponding to a transmission of a second channel and/or a second reference signal; and based on parameter information corresponding to a first UL power control parameter identifier, determine UL power control parameter information of at least one of:
the first channel, the first reference signal, the second channel, or the second reference signal.

According to a fourth aspect of embodiments of the disclosure, a communication processing apparatus is provided. The apparatus is applied to a network device, and includes: a second communication module, configured to send parameter information corresponding to at least one UL power control parameter identifier respectively associated with a first qnew and/or a second qnew, in which the first qnew is determined from a first candidate beam reference signal set, the second qnew is determined from a second candidate beam reference signal set, the first qnew indicates a beam and a path loss reference signal corresponding to a transmission of a first channel and/or a first reference signal, and the second qnew indicates a beam and a path loss reference signal corresponding to a transmission of a second channel and/or a second reference signal; in which parameter information corresponding to a first UL power control parameter identifier is used to determine UL power control parameter information of at least one of:
the first channel, the first reference signal, the second channel, or the second reference signal.

According to a fifth aspect of embodiments of the disclosure, a communication device is provided. The communication device includes: a transceiver, a memory, and a processor connected to the transceiver and the memory, respectively, in which the processor is configured to control wireless signal transmission and reception of the transceiver by executing computer-executable instructions on the memory, and is capable of implementing the method of embodiments of the first aspect of the disclosure or the method of embodiments of the second aspect of the disclosure.

According to a sixth aspect of embodiments of the disclosure, a computer storage medium is provided. The computer storage medium stores computer-executable instructions, and the computer-executable instructions, when being executed by a processor, can implement the method of embodiments of the first aspect of the disclosure or the method of embodiments of the second aspect of the disclosure.

The embodiments of the disclosure provide a communication processing method and a communication processing apparatus. The terminal receives the parameter information respectively corresponding to the at least one UL power control parameter identifier associated with a first qnew and/or a second qnew. The first qnew is determined from the first candidate beam reference signal set, the second qnew is determined from the second candidate beam reference signal set, the first qnew indicates a beam and a path loss reference signal corresponding to a transmission of a first channel and/or a first reference signal, and the second qnew indicates a beam and a path loss reference signal corresponding to a transmission of a second channel and/or a second reference signal. The terminal then determines the UL power control parameter information of the first channel and/or the first reference signal and/or the second channel and/or the second reference signal based on the parameter information corresponding to the first UL power control parameter identifier. In the embodiments, in the case of M-TRP, the terminal may determine at least one qnew based on a plurality of candidate beam reference signal sets, and after determining the target channels and/or reference signals using this qnew, it provides technical solutions for the UL power control parameters of these channels and/or reference signals, which improves a success rate of TRP-based beam failure recovery.

Additional aspects and advantages of the disclosure will be given in part in the following descriptions, become apparent in part from the following descriptions, or be learned from the practice of the disclosure.

### BRIEF DESCRIPTION OF THE DRAWINGS

The above and/or additional aspects and advantages of the disclosure will become apparent and readily understood from the following descriptions of the embodiments in combination with the accompanying drawings, in which:
FIG. 1 is a schematic diagram of a communication system according to an embodiment of the disclosure.
FIG. 2 is a schematic flowchart of a communication processing method according to an embodiment of the disclosure.
FIG. 3 is a schematic flowchart of another communication processing method according to an embodiment of the disclosure.
FIG. 4 is a schematic flowchart of yet another communication processing method according to an embodiment of the disclosure.
FIG. 5 is a block diagram of a communication processing apparatus according to an embodiment of the disclosure.
FIG. 6 is a block diagram of another communication processing apparatus according to an embodiment of the disclosure.
FIG. 7 is a schematic diagram of a communication device according to an embodiment of the disclosure.
FIG. 8 is a schematic diagram of a chip according to an embodiment of the disclosure.

### DETAILED DESCRIPTION

Embodiments of the disclosure are described in detail below, examples of which are illustrated in the accompanying drawings, in which the same or similar reference numbers throughout represent the same or similar elements or elements having the same or similar functions. The embodiments described below with reference to the accompanying drawings are exemplary and are intended to explain the disclosure, which shall not be construed as limiting the disclosure. It should be noted that the embodiments of the disclosure and the features in the embodiments can be combined with each other without conflict.

The terms used in the embodiments of the disclosure are only for the purpose of describing specific embodiments, and are not intended to limit the embodiments of the disclosure. The singular forms of "a" and "the" used in the embodiments of the disclosure and the attached claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein can be interpreted as "when", "while" or "in response to determining".

For easy of understanding, the terms involved in the embodiment are introduced first, including:
1. TRP (transmission and reception point) corresponds to a serving cell or a neighboring cell of a terminal;
2. CORESET (control resource set) is a configured resource used for a physical downlink control channel (PDCCH) to send a DCI signaling;
3. CORESETPoolIndex. One CORESETPoolIndex value corresponds to one or more CORESETs, and each CORESETPoolIndex corresponds to one TRP. That is, CORESETs corresponding to different CORESETPoolIndexe values are PDCCHs used for different TRPs;
4. TCI (transmission configuration indication) is used to inform a user that the receiving beam to be used for receiving a PDCCH, a physical downlink shared channel (PDSCH), or a channel state information (CSI)-reference signal (RS) should be the same as the one used for receiving which synchronization signal block (SSB) or a CSI-RS transmitted by a base station. Or, TCI is used to inform the user that the sending beam to be used for sending a PUCCH, a PUSCH, or a SRS should be the same as the one used for sending or receiving which RS (e.g., SRS or CSI-RS); and
5. qnew of a target beam(a new beam). During beam failure recovery (BFR), qnew is determined from a candidate beam RS set, and is used to inform a network device (e.g., base station) that this new beam can be used for transmission.

In new radio (NR) technology, especially when a communication frequency band is in a Frequency Range 2, since high-frequency channels attenuate rapidly, beam-based transmission and reception are required to ensure coverage.

For reception of the PDCCH, the base station indicates quasi-colocation (QCL) information of the PDCCH by configuring a TCI state for a CORESET, including QCL Type D, which is a spatial reception parameter, commonly known as beam. After the terminal obtains the TCI state for the CORESET, as the terminal moves, the configured TCI state may be inappropriate for the current situation, so the terminal needs to be configured with failure detection resources. During cell-specific failure detection, one failure detection resource set q0 is configured for a bandwidth part (BWP) of a serving cell. During TRP-specific failure detection, a failure detection resource set (q0,0) and another failure detection resource set (q0,1) are configured for a BWP of a serving cell. If the base station does not configure the q0 for the terminal, the terminal needs to determine failure detection resources from CSI-RSs corresponding to TCI states of all the CORESETs. When the terminal is not configured with the (q0,0) and (q0,1), the terminal first determines two CORESET groups based on the CORESETPoolIndex, and then determines the failure detection resources of each group for CSI-RSs corresponding to TCI states of one or more CORESETs in each CORESET group.

However, in the case of M-TRP (M-DCI based M-TRP is included), each TRP sends its own TRP-related transmission resource indication and TCI state via its own DCI. Each CORESET in a plurality of CORESETs is configured with a CORESETPoolIndex, and different CORESETPoolIndexes correspond to different TRPs. Therefore, in the case of M-DCI based M-TRP, a default failure detection resource set is determined according to CORESETs corresponding to the CORESETPoolIndex. In the case of M-TRP(S-DCI based M-TRP is included), one piece of DCI can be used to send transmission resource indications and TCI states corresponding to a plurality of TRP. The CORESETs in the plurality of CORESETs are not configured with CORESETPoolIndexes.

In the case of M-TRP, for each failure detection resource set, a qnew of a target beam or a new beam is determined from a corresponding candidate beam RS set, which is used to inform a base station that the new beam can be used for transmission. However, after some channels and/or reference signals determine which qnew to use, there is still a lack of technical solutions on how to determine UL power control parameters for these channels and/or RSs.

Therefore, the embodiment proposes a communication processing method and a communication processing apparatus. In the case of M-TRP, a terminal may determine at least one qnew based on a plurality of candidate beam RS sets, and after determining the target channels and/or RSs adopt this qnew, it adopts the technical solutions for determining UL power control parameters for these channels and/or RSs provided by the disclosure.

The communication processing method and the communication processing apparatus provided in the disclosure are described in detail below with reference to the accompanying drawings.

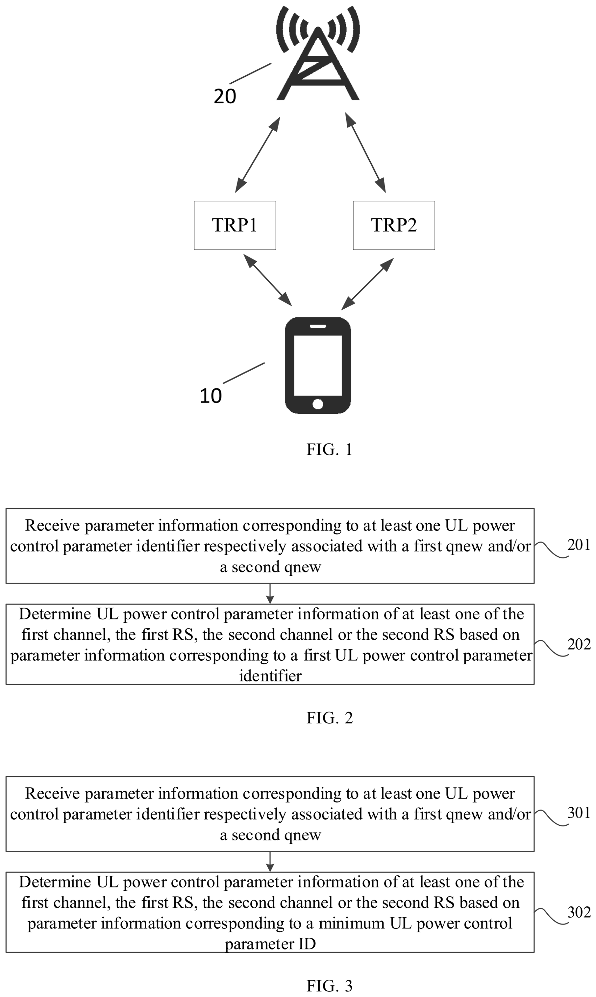

FIG. 1 is a schematic diagram of a communication system according to an embodiment of the disclosure. The communication system includes a terminal 10 and a network device 20.

There may be one or more terminals 10, and the one or more terminals 10 may be distributed within the cell managed by each network device 20. The terminal 10 may include various handheld devices with wireless communication functions, vehicle-mounted devices, wearable devices, computing devices or other processing devices connected to a wireless modem, as well as various forms of user equipments (UEs) and mobile stations (MSs), etc. For the convenience of description, in the embodiment of the disclosure, the above-mentioned devices are collectively referred to as a terminal.

The network device 20 is a device deployed in an access network to provide wireless communication capabilities for the terminal 10. The network device 20 may include various forms of macro base stations, micro base stations, relay stations, and access points. In systems using different wireless access technologies, the device with capabilities of the network device may be called by different names. For example, in a 5G NR system, it is called a gNB (which is short for gNodeB). As communication technology evolves, the name "network device" may also change. For the convenience of description, in the embodiments, the above-mentioned devices that provide wireless communication functions for the terminal 10 are collectively referred to as network device. A connection may be established between the network device 20 and the terminal 10 via an air interface, for communications between each other, e.g., signaling and data interactions. There may be several network devices 20, and two adjacent network devices 20 may communicate with each other in a wired or wireless manner. The terminal 10 is capable of switching between different network devices 20 and establishing connections with different network devices 20.

In some examples, the network device 20 may be provided with at least two TRPs. As illustrated in FIG. 1, the network device 20 has two corresponding TRPs, which are used by the network device 20 to provide services for the terminal device 10, including sending a PDCCH to the terminal 10 using these two TRPs. When using these two TRPs, i.e., M-TRP, for PDCCH transmission, the PDCCH transmission for M-TRP has one or more corresponding CORESETs. TCI states of received beams corresponding to each CORESET may be the same or different, and may be one or more. The TCI state is used to indicate an RS resource identifier corresponding to a beam.

FIG. 2 is a schematic flowchart of a communication processing method according to an embodiment of the disclosure. As illustrated in FIG. 2, the method is performed by a terminal, and includes the following steps. It should be noted that each of the embodiments in the disclosure may be implemented independently or combined with each other.

At step 201, parameter information corresponding to at least one UL power control parameter identifier respectively associated with a first qnew and/or a second qnew is received.

The first qnew is determined from a first candidate beam RS set, the second qnew is determined from a second candidate beam RS set. The first qnew indicates a beam and a path loss RS corresponding to a transmission of a first channel and/or a first RS, and the second qnew indicates a beam and a path loss RS corresponding to a transmission of a second channel and/or a second RS. The beam may be referred to as at least one of TCI state, spatial relation information, or QCL parameter. In some examples, the first channel and/or the first RS includes at least one of a first PUSCH, a first PUCCH or a first SRS. The second channel and/or the second RS includes at least one of a second PUSCH, a second PUCCH or a second SRS.

The first qnew may be used to indicate transmission using a beam corresponding to the first qnew. The second qnew may be used to indicate transmission using a beam corresponding to the second qnew.

During TRP-specific failure detection, two TRPs may be configured for a BWP of a serving cell, each TRP corresponds to a failure detection resource set, and each failure detection resource set corresponds to a candidate beam RS set. That is, the two TRPs correspond to two candidate beam RS sets, i.e., the first candidate beam RS set and the second candidate beam RS set, respectively. During beam failure recovery in the embodiments, at least one qnew is determined from the first candidate beam RS set and the second candidate beam RS set, which is used to inform the network device that the target beam or new beam can be used for transmission.

In some examples, the method in the embodiments further includes: (the terminal) receiving first configuration information, in which the first configuration information is used for configuring the first candidate beam RS set and the second candidate beam RS set, the first candidate beam RS set corresponds to a first failure detection resource set, and the second candidate beam RS set corresponds to a second failure detection resource set.

For example, the terminal may receive the first configuration information, which is used to configure the first candidate beam RS set and the second candidate beam RS set.

In some examples, the method in the embodiment further includes: (the terminal) receiving indication information, in which the indication information is used for determining a first unified TCI state and a second unified TCI state. In an embodiment of the disclosure, the first unified TCI state and the second unified TCI state may be determined by the same indication information, or the first unified TCI state and the second unified TCI state may be determined by different indication information, which is not limited in the embodiment.

The unified TCI state is applicable to channels/RSs such as a PDCCH, a PDSCH, a PUCCH, a PUSCH, a demodulation RS (DMRS) of the PDCCH, a DMRS of the PDSCH, a DMRS of the PUCCH, a DMRS of the PUSCH, and other CSI-RSs and SRSs. Whether these channels/RSs use the first unified TCI state, the second unified TCI state, or both of the unified TCI states, or neither of the unified TCI states is determined by additional configuration information or indication for these channels/RSs.

For example, the indication information received by the terminal may include a MAC CE, and the MAC CE indicates that at least one unified TCI state corresponds to a code point in a TCI state indication field carried in DCI. Or, the indication information received by the terminal may include a MAC CE and DCI, the MAC CE is used to indicate at least one unified TCI state respectively corresponding to a plurality of code points corresponding to a TCI state indication field carried in the DCI, and the TCI state indication field carried in the DCI is used to indicate one of the plurality of code points.

In an embodiment of the disclosure, the first unified TCI state or the second unified TCI state includes at least one of:
a Joint TCI State; a DL TCI State; or an UL TCI State. For example, the first unified TCI state includes the Joint TCI State, the DL TCI State, the UL TCI State, or the DL TCI State and the UL TCI State. For example, the second unified TCI state includes the Joint TCI State, the DL TCI State, the UL TCI State, or the DL TCI State and the UL TCI State.

In some examples, the process of determining the first failure detection resource set and the second failure detection resource set includes: (the terminal) receiving second configuration information, in which the second configuration information is used for indicating the first failure detection resource set and the second failure detection resource set, so that the two failure detection resource sets can be determined based on the second configuration information, for example, in an S-DCI M-TRP scenario or an M-DCI M-TRP scenario; and/or determining the first failure detection resource set based on a TCI state of a CORESET corresponding to a first CORESETPoolIndex, and determining the second failure detection resource set based on a TCI state of a CORESET corresponding to a second CORESETPoolIndex, in which the at least two CORESETs are configured with different CORESETPoolIndexes, e.g., in an M-DCI M-TRP scenario. For example, the terminal determines the first failure detection resource set based on the TCI state corresponding to the CORESET in the first CORESETPoolIndex (some CORESETs may adopt the first unified TCI state, and some CORESETs do not adopt the first unified TCI state), and determines the second failure detection resource set based on the TCI state corresponding to the CORESET in the second CORESETPoolIndex (some CORESETs may adopt the second unified TCI state, and some CORESETs do not adopt the second unified TCI state).

In some examples, the first failure detection resource set and the second failure detection resource set may be determined based on the first unified TCI state and the second unified TCI state. For example, the first failure detection resource set may include RS resources corresponding to the first unified TCI state, and the second failure detection resource set may include RS resources corresponding to the second unified TCI state. The RS resource may be an RS resource corresponding to a QCL Type D indicated by a TCI state, e.g., in an S-DCI M-TRP scenario or an M-DCI M-TRP scenario.

At step 202, UL power control parameter information of at least one of the first channel, the first RS, the second channel or the second RS is determined according to parameter information corresponding to a first UL power control parameter identifier.

The first UL power control parameter identifier may be a specified UL power control parameter identifier. The first UL power control parameter identifier may be specified by the network device, e.g., according to a signaling configuration of the network device. Or, the first UL power control parameter identifier may be preconfigured by a protocol. For example, the UL power control parameter information of at least one of the first channel, the first RS, the second channel or the second RS may be determined based on the parameter information corresponding to the first UL power control parameter identifier according to contents preconfigured by the protocol.

In the embodiment, in the case of M-TRP, the terminal determines at least one qnew based on a plurality of candidate beam RS sets, and after determining that PUSCH/PUCCH/SRS adopts the qnew, it adopts the technical solution for determining an UL power control parameter of PUSCH/PUCCH/SRS provided by the disclosure, which improves a success rate of TRP-based BFR.

FIG. 3 is a schematic flowchart of a communication processing method according to an embodiment of the disclosure. Based on the embodiment of FIG. 2, as illustrated in FIG. 3, the method is performed by a terminal, and includes the following steps. It should be noted that each of the embodiments in the disclosure may be implemented independently or combined with each other.

At step 301, parameter information respectively corresponding to at least one UL power control parameter identifier associated with a first qnew and/or a second qnew is received.

The first qnew is determined from a first candidate beam RS set, the second qnew is determined from a second candidate beam RS set. The first qnew is used to indicate a beam and a path loss RS corresponding to a transmission of a first channel and/or a first RS, and the second qnew is used to indicate a beam and a path loss RS corresponding to a transmission of a second channel and/or a second RS.

In some examples, the first channel includes at least one of:
a first PUSCH; or a first PUCCH;
the first RS includes a first SRS;
the second channel includes at least one of:
   a second PUSCH; or a second PUCCH; and
   the second RS includes a second SRS.

In some examples, the method in the embodiment includes: (the terminal) sending a scheduling request for BFR; and/or (the terminal) sending a PUSCH. Correspondingly, the network device receives the PUSCH. The PUSCH carries an UL MAC CE, and the UL MAC CE indicates the first qnew and/or the second qnew (if the qnew is found, it is carried, otherwise it is not carried), and at least one of:
an identifier (ID) of a first failure detection resource set; an ID of the first candidate beam RS set; a first CORESETPoolIndex; an ID of a second failure detection resource set; an ID of the second candidate beam RS set; or a second CORESETPoolIndex.

For example, the terminal and the network device synchronously update the first unified TCI state to the first qnew, i.e., update the first PUCCH, the first PUSCH or the first SRS to be transmitted based on the first qnew after t1; and/or the terminal and the network device synchronously update the second unified TCI state to the second qnew, i.e., update the second PUCCH, the second PUSCH or the second SRS to be transmitted based on the second qnew after t1. In detail, the terminal determines that the first PUCCH, the first PUSCH or the first SRS adopts the first qnew according to a radio resource control (RRC) configuration, a DCI signaling indication or a preset rule. Moreover, the terminal determines that the second PUCCH, the second PUSCH, or the second SRS adopts the second qnew according to an RRC configuration, a DCI signaling indication or a preset rule. For the first PUCCH, the first PUSCH or the first SRS, in addition to a QCL Type of the first qnew, it also adopts a path loss corresponding to the first qnew. For the second PUCCH, the second PUSCH or the second SRS, in addition to a QCL Type of the second qnew, it also adopts a path loss corresponding to the second qnew.

At step 302, UL power control parameter information of at least one of the first channel, the first RS, the second channel or the second RS is determined according to parameter information corresponding to a minimum UL power control parameter ID.

In some examples, an UL power control parameter of the first PUSCH or the second PUSCH includes at least one of:
a first power parameter, a second power parameter or a power control adjustment state of first PUSCH or the second PUSCH.

For example, taking the first PUSCH as an example, the parameters of the first PUSCH include P_{O_UE_PUSCH,b,f,c}(j) (the first power parameter of PUSCH, corresponding to p0-r17 in the pseudo-code example below), α_{b,f,c}(j) (the second power parameter of PUSCH, corresponding to alpha-r17 in the pseudo-code example below), and a power control adjustment state 1 of PUSCH (corresponding to closedLoopIndex-r17 in the pseudo-code example below), which are consistent with parameters provided by p0-Alpha-CLID-PUSCH-Set associated with the minimum UL power control parameter ID (ul-powercontrolld) corresponding to the first qnew on a primary cell (PCell), a primary secondary cell (PSCell) or a secondary cell (SCell) (associating with the first qnew means associating with the first CORESETPoolIndex, the first unified TCI state, the first beam failure detection resource set or the first candidate beam RS set).

Correspondingly, the terminal needs to receive the configuration information and the parameter information corresponding to each ul-powercontrolld associated with the first qnew. In the case of the second qnew, it is necessary for the terminal to receive the parameter information corresponding to each ul-powercontrolld associated with the second qnew. The embodiments may receive two sets of parameter information corresponding to each ul-powercontrolld, and each set corresponds to at least one of a different qnew, a different beam failure detection resource set, a different candidate beam RS set, a different CORESETPoolIndex or a different unified TCI state. The parameter information corresponding to each ul-powercontrolId in each set are involved in the following pseudo-code example:

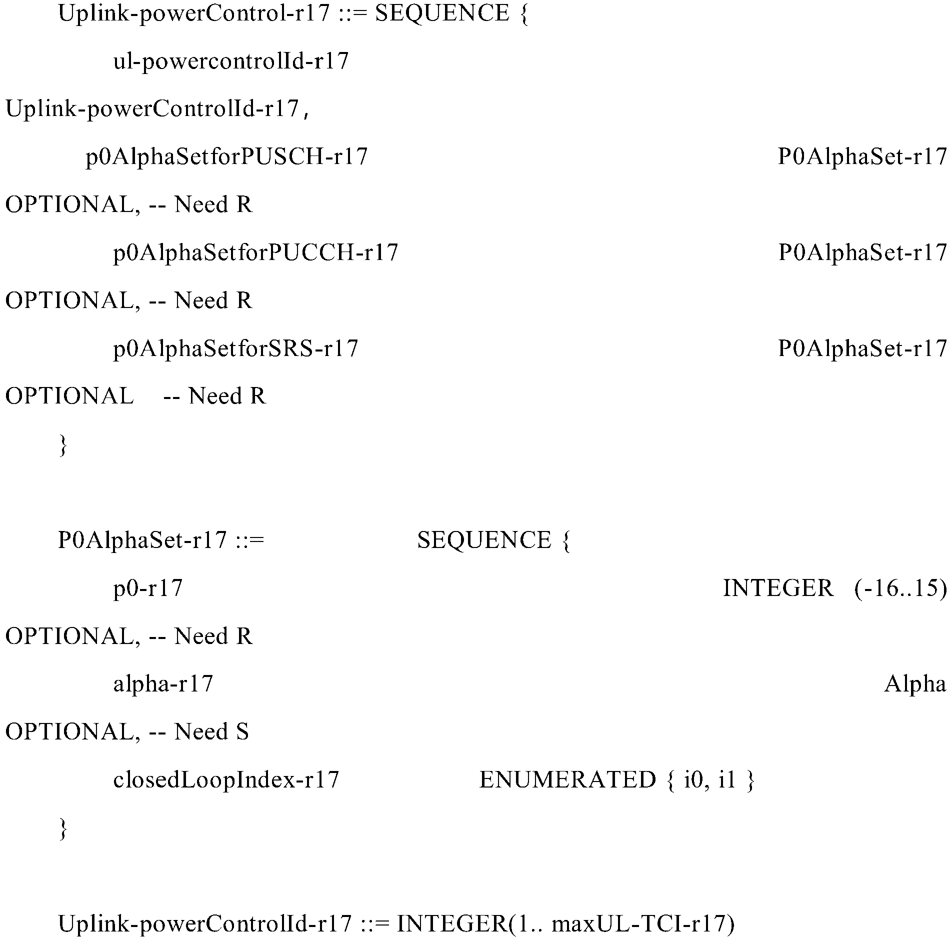

In some examples, an UL power control parameter of the first PUCCH or the second PUCCH includes at least one of:
a first power parameter or a power control adjustment state of PUCCH.

For example, taking the first PUCCH as an example, the parameters of the first PUCCH include P_{O_PUCCH,b,f,c}(qᵤ) (the first power parameter of PUCCH) and a power control adjustment state 1 of PUCCH, which are consistent with parameters provided by p0-Alpha-CLID-PUCCH-Set associated with the minimum ul-powercontrolId corresponding to the first qnew on the PCell, the PSCell or the SCell.

In some examples, an UL power control parameter of the first SRS or the second SRS includes at least one of:
a first power parameter or a second power parameter of SRS or a power control adjustment state of PUSCH.

For example, taking the first SRS as an example, the parameters of the first SRS include P_{O_SRS,b,f,c}(qₛ) (the first power parameter of SRS), α_{SRS,b,f,c}(qₛ) (the second power parameter of SRS) and a power control adjustment state 1 of PUSCH, which are consistent with parameters provided by p0-Alpha-CLID-SRS-Set associated with the minimum ul-powercontrolId corresponding to the first qnew on the PCell, the PSCell or the SCell.

In the embodiment, in the case of M-TRP, the terminal may determine at least one qnew based on a plurality of candidate beam RS sets, and after determining that the PUSCH/PUCCH/SRS adopts the qnew, it adopts the technical solution for determining an UL power control parameter of PUSCH/PUCCH/SRS provided by the disclosure, which improves a success rate of TRP-based BFR.

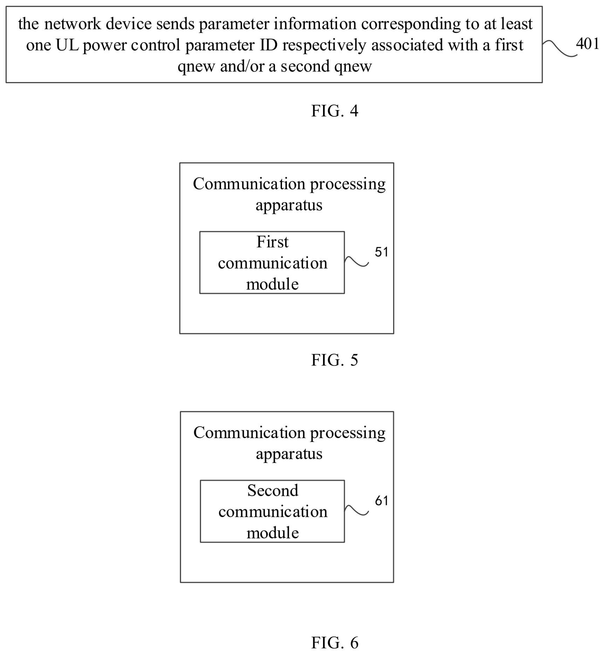

FIG. 4 is a schematic flowchart of a communication processing method according to an embodiment of the disclosure. The method is performed by a network device, and includes the following steps. It should be noted that each of the embodiments in the disclosure may be implemented independently or combined with each other.

At step 401, the network device sends parameter information corresponding to at least one UL power control parameter ID respectively associated with a first qnew and/or a second qnew.

The first qnew is determined from a first candidate beam RS set, the second qnew is determined from a second candidate beam RS set. The first qnew is used to indicate a beam and a path loss RS corresponding to a transmission of a first channel and/or a first RS, and the second qnew is used to indicate a beam and a path loss RS corresponding to a transmission of a second channel and/or a second RS. Parameter information corresponding to a first UL power control parameter ID is used to determine UL power control parameter information of at least one of: the first channel, the first RS, the second channel, or the second RS. In some examples, the first UL power control parameter ID is a minimum UL power control parameter ID.

The first UL power control parameter ID may be a specified UL power control parameter ID. The first UL power control parameter identifier may be specified by the network device, e.g., according to a signaling configuration of the network device. Or, the first UL power control parameter ID may be preconfigured by a protocol. For example, the UL power control parameter information of at least one of the first channel, the first RS, the second channel or the second RS can be determined based on the parameter information corresponding to the first UL power control parameter ID according to contents preconfigured by the protocol.

In some examples, the method in the embodiment further includes: (the network device) sending first configuration information, in which the first configuration information is used for a terminal to configure the first candidate beam RS set and the second candidate beam RS set, the first candidate beam RS set corresponds to a first failure detection resource set, and the second candidate beam RS set corresponds to a second failure detection resource set.

In some examples, the method in the embodiment further includes: (the network device) sending indication information, in which the indication information is used for determining a first unified TCI state and a second unified TCI state. For example, the indication information sent by the network device may include a MAC CE, and the MAC CE may indicate at least one unified TCI state corresponds to a code point in a TCI state indication field carried in DCI. Or, the indication information sent by the network device may include a MAC CE and DCI, the MAC CE is used to indicate at least one unified TCI state respectively corresponding to a plurality of code points corresponding to a TCI state indication field carried in the DCI, and the TCI state indication field carried in the DCI is used to indicate one of the plurality of code points.

In some examples, the first unified TCI state or the second unified TCI state includes at least one of:
a Joint TCI State; a DL TCI State; or an UL TCI State. For example, the first unified TCI state includes the Joint TCI State, the DL TCI State, the UL TCI State, or the DL TCI State and the UL TCI State. For example, the second unified TCI state includes the Joint TCI State, the DL TCI State, the UL TCI State, or the DL TCI State and the UL TCI State.

In some examples, the method in the embodiment further includes: sending second configuration information, in which the second configuration information is used for indicating the first failure detection resource set and the second failure detection resource set.

In some examples, the first failure detection resource set includes RS resources corresponding to the first unified TCI state, and the second failure detection resource set includes RS resources corresponding to the second unified TCI state. The RS resource may be an RS resource corresponding to a QCL Type D indicated by a TCI state. For example, in an S-DCI M-TRP scenario or an M-DCI M-TRP scenario, the first failure detection resource set and the second failure detection resource set are determined based on the first unified TCI state and the second unified TCI state.

In some examples, the first channel includes at least one of:
a first PUSCH; or a first PUCCH;
the first RS includes a first SRS;
the second channel includes at least one of:
   a second PUSCH; or a second PUCCH; and
   the second RS includes a second SRS.

In some examples, an UL power control parameter of the first PUSCH or the second PUSCH includes at least one of:
a first power parameter, a second power parameter or a power control adjustment state of PUSCH.

In some examples, an UL power control parameter of the first PUCCH or the second PUCCH includes at least one of:
a first power parameter or a power control adjustment state of PUCCH.

In some examples, an UL power control parameter of the first SRS or the second SRS includes at least one of:
a first power parameter of SRS, a second power parameter of SRS or a power control adjustment state of PUSCH.

In some examples, the method in the embodiment further includes: receiving a scheduling request for BFR; and/or receiving a PUSCH, in which the PUSCH carries an UL MAC CE, and the UL MAC CE indicates the first qnew and/or the second qnew, and at least one of:
an ID of a first failure detection resource set; an ID of the first candidate beam RS set; a first CORESETPoolIndex; an ID of a second failure detection resource set; an ID of the second candidate beam RS set; or a second CORESETPoolIndex.

It should be noted that the above communication processing method can refer to the corresponding descriptions in FIGs. 2-3, which will not be repeated here.

By applying the communication processing method provided in the embodiment, in the case of M-TRP, the terminal may determine the at least one qnew based on the plurality of candidate beam RS sets, and after determining that the PUCH/PUCH/SRS adopts the qnew, it adopts the technical solution for determining the UL power control parameter of the PUCH/PUCH/SRS provided by the disclosure, which improves a success rate of TRP-based BFR.

In the above embodiments provided by the disclosure, the methods provided by the embodiments of the disclosure is introduced from the perspectives of the terminal and the network device, respectively. In order to realize the functions in the methods provided by the embodiments of the disclosure, the terminal and the network device may include a hardware structure and a software module, and the above functions can be realized in the form of the hardware structure, the software module, or a combination of the hardware structure and the software module. A certain function of the above functions may be implemented in a hardware structure, a software module, or a combination of the hardware structure and the software module.

Corresponding to the communication processing method provided in the above embodiment, the disclosure also provides a communication processing apparatus. Since the communication processing apparatus provided in the embodiment of the disclosure corresponds to the communication processing method provided in the above embodiment, the implementations of the communication processing method are also applicable to the communication processing apparatus provided in the embodiment, which will not be described in detail in the embodiment.

FIG. 5 is a schematic block diagram of a communication processing apparatus according to an embodiment of the disclosure. The communication processing apparatus is applicable to a terminal.

As illustrated in FIG. 5, the apparatus includes: a first communication module 51, configured to receive parameter information corresponding to at least one UL power control parameter ID respectively associated with a first qnew and/or a second qnew, in which the first qnew is determined from a first candidate beam RS set, the second qnew is determined from a second candidate beam RS set, the first qnew indicates a beam and a path loss RS corresponding to a transmission of a first channel and/or a first RS, and the second qnew indicates a beam and a path loss RS corresponding to a transmission of a second channel and/or a second RS; and according to parameter information corresponding to a first UL power control parameter ID, determine UL power control parameter information of at least one of: the first channel, the first RS, the second channel, or the second RS.

In some embodiments, the first UL power control parameter ID is a minimum UL power control parameter ID.

In some embodiments, the first communication module 51 is further configured to: receive first configuration information, in which the first configuration information is used for configuring the first candidate beam RS set and the second candidate beam RS set, the first candidate beam RS set corresponds to a first failure detection resource set, and the second candidate beam RS set corresponds to a second failure detection resource set.

In some embodiments, the first communication module 51 is further configured to: receive indication information, in which the indication information is used for determining a first unified TCI state and a second unified TCI state.

In some embodiments, the first unified TCI state or the second unified TCI state includes at least one of:
a Joint TCI State; a DL TCI State; or an UL TCI State.

In some embodiments, the first communication module 51 is further configured to: determine the first failure detection resource set and the second failure detection resource set based on at least one of:
receiving second configuration information, in which the second configuration information is used for indicating the first failure detection resource set and the second failure detection resource set; and/or determining the first failure detection resource set based on a TCI state of a CORESET corresponding to a first CORESETPoolIndex, and determining the second failure detection resource set based on a TCI state of a CORESET corresponding to a second CORESETPoolIndex, in which the at least two CORESETs are configured with different CORESETPoolIndexes.

In some embodiments, the first failure detection resource set includes RS resources corresponding to the first unified TCI state, and the second failure detection resource set includes RS resources corresponding to the second unified TCI state.

In some embodiments, the indication information includes a MAC CE, at least one unified TCI state indicated by the MAC CE corresponds to a code point in a TCI state indication field carried in DCI.

In some embodiments, the indication information includes a MAC CE and DCI, the MAC CE is used for indicating at least one unified TCI state respectively corresponding to a plurality of code points corresponding to a TCI state indication field carried in the DCI, and the TCI state indication field carried in the DCI is used for indicating one of the plurality of code points.

In some embodiments, the first channel includes at least one of:
a first PUSCH; or a first PUCCH;
the first RS includes a first SRS;
the second channel includes at least one of:
   a second PUSCH; or a second PUCCH; and
   the second RS includes a second SRS.

In some embodiments, an UL power control parameter of the first PUSCH or the second PUSCH includes at least one of:
a first power parameter, a second power parameter or a power control adjustment state of PUSCH.

In some embodiments, an UL power control parameter of the first PUCCH or the second PUCCH includes at least one of:
a first power parameter or a power control adjustment state of PUCCH.

In some embodiments, an UL power control parameter of the first SRS or the second SRS includes at least one of:
a first power parameter of SRS, a second power parameter of SRS or a power control adjustment state of PUSCH.

In some embodiments, the method further includes: sending a scheduling request for BFR; and/or sending a PUSCH, in which the PUSCH carries an UL MAC CE, and the UL MAC CE indicates the first qnew and/or the second qnew, and at least one of:
an ID of a first failure detection resource set; an ID of the first candidate beam RS set; a first CORESETPoolIndex; an ID of a second failure detection resource set; an ID of the second candidate beam RS set; or a second CORESETPoolIndex.

In the embodiment, in the case of M-TRP, the terminal may determine the at least one qnew based on the plurality of candidate beam RS sets, and after determining that the PUSCH/PUCCH/SRS adopts the qnew, it adopts the technical solution for determining the UL power control parameter of the PUSCH/PUCCH/SRS provided by the disclosure, which improves a success rate of TRP-based BFR.

FIG. 6 is a schematic block diagram of another communication processing apparatus according to an embodiment of the disclosure. The communication processing apparatus is applied to a network device.

As illustrated in FIG. 6, the apparatus includes: a second communication module 61, configured to send parameter information corresponding to at least one UL power control parameter ID respectively associated with a first qnew and/or a second qnew, in which the first qnew is determined from a first candidate beam RS set, the second qnew is determined from a second candidate beam RS set, the first qnew indicates a beam and a path loss RS corresponding to a transmission of a first channel and/or a first RS, and the second qnew indicates a beam and a path loss RS corresponding to a transmission of a second channel and/or a second RS; in which parameter information corresponding to a first UL power control parameter ID is used to determine UL power control parameter information of at least one of: the first channel, the first RS, the second channel, or the second RS.

In some embodiments, the first UL power control parameter ID is a minimum UL power control parameter ID.

In some embodiments, the second communication module 61 is further configured to: send first configuration information, in which the first configuration information is used for a terminal to configure the first candidate beam RS set and the second candidate beam RS set, the first candidate beam RS set corresponds to a first failure detection resource set, and the second candidate beam RS set corresponds to a second failure detection resource set.

In some embodiments, the second communication module 61 is further configured to: send indication information, in which the indication information is used for determining a first unified TCI state and a second unified TCI state.

In some embodiments, the first unified TCI state or the second unified TCI state includes at least one of:
a Joint TCI State; a DL TCI State; or an UL TCI State.

In some embodiments, the second communication module 61 is further configured to: send second configuration information, in which the second configuration information is used for indicating the first failure detection resource set and the second failure detection resource set.

In some embodiments, the first failure detection resource set includes RS resources corresponding to the first unified TCI state, and the second failure detection resource set includes RS resources corresponding to the second unified TCI state.

In some embodiments, the indication information includes a MAC CE, at least one unified TCI state indicated by the MAC CE corresponds to a code point in a TCI state indication field carried in DCI.

In some embodiments, the indication information includes a MAC CE and DCI, the MAC CE is used for indicating at least one unified TCI state respectively corresponding to a plurality of code points corresponding to a TCI state indication field carried in the DCI, and the TCI state indication field carried in the DCI is used for indicating one of the plurality of code points.

In some embodiments, the first channel includes at least one of:
a first PUSCH; or a first PUCCH;
the first RS includes a first SRS;
the second channel includes at least one of:
   a second PUSCH; or a second PUCCH; and
   the second RS includes a second SRS.

In some embodiments, an UL power control parameter of the first PUSCH or the second PUSCH includes at least one of:
a first power parameter, a second power parameter or a power control adjustment state of PUSCH.

In some embodiments, an UL power control parameter of the first PUCCH or the second PUCCH includes at least one of:
a first power parameter or a power control adjustment state of PUCCH.

In some embodiments, an UL power control parameter of the first SRS or the second SRS includes at least one of:
a first power parameter of SRS, a second power parameter of SRS or a power control adjustment state of PUSCH.

In some embodiments, the second communication module 61 is further configured to: receive a scheduling request for BFR; and/or receive a PUSCH, in which the PUSCH carries an UL MAC CE, and the UL MAC CE indicates the first qnew and/or the second qnew, and at least one of:
an ID of a first failure detection resource set; an ID of the first candidate beam RS set; a first CORESETPoolIndex; an ID of a second failure detection resource set; an ID of the second candidate beam RS set; or a second CORESETPoolIndex.

In the embodiment, in the case of M-TRP, the terminal determines the at least one qnew based on the plurality of candidate beam RS sets, and after determining which PUSCH/PUCCH/SRS adopts the qnew, it adopts the technical solution for determining the UL power control parameter of the PUSCH/PUCCH/SRS provided by the disclosure, which improves a success rate of TRP-based BFR.

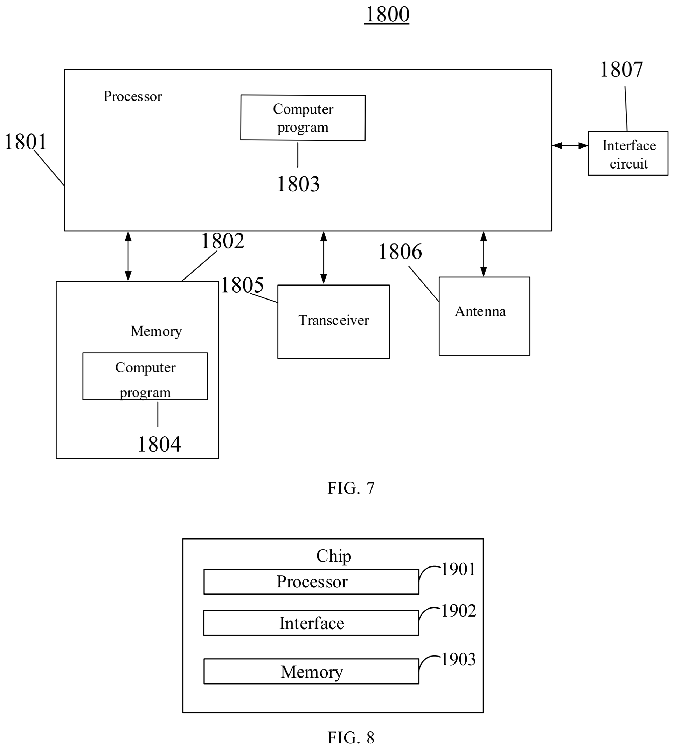

As illustrated in FIG. 7, FIG. 7 is a schematic structural diagram of a communication device 1800 provided by the embodiment. The communication device 1800 may be a network device, a UE, or a chip, a chip system or a processor that supports the network device to implement the above method, or a chip, a chip system or a processor that supports the UE to implement the above method. The device is used to implement the methods described in the above method embodiments with reference to the descriptions of the above method embodiments.

The communication device 1800 may include one or more processors 1801. The processor 1801 may be a general purpose processor or a dedicated processor, such as, a baseband processor or a central processor. The baseband processor is used for processing communication protocols and communication data. The central processor is used for controlling the communication device (e.g., base station, baseband chip, terminal, terminal chip, distributed unit (DU) or central unit (CU)), executing computer programs, and processing data of the computer programs.

In an embodiment of the disclosure, the communication device 1800 includes one or more memories 1802 on which a computer program 1804 is stored. When the processor 1801 executes the computer program 1804, the communication device 1800 is caused to implement the methods described in the above method embodiments. In an embodiment of the disclosure, the memory 1802 may also be used to store data. The communication device 1800 and the memory 1802 may be provided separately or may be integrated together.

In an embodiment of the disclosure, the communication device 1800 may also include a transceiver 1805 and an antenna 1806. The transceiver 1805 may be referred to as transceiver unit, transceiver machine or transceiver circuit, for realizing a transceiver function. The transceiver 1805 may include a receiver and a transmitter. The receiver may be referred to as receiver machine or receiving circuit, for realizing a receiving function. The transmitter may be referred to as transmitter machine or transmitting circuit, for realizing a transmitting function.

In an embodiment of the disclosure, the communication device 1800 may also include one or more interface circuits 1807. The interface circuits 1807 are used to receive code instructions and transmit the code instructions to the processor 1801. The processor 1801 runs the code instructions to cause the communication device 1800 to implement the methods described in the method embodiments.

In an implementation, the processor 1801 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1801 may store a computer program 1803, which is used to cause the communication device 1800 to implement the methods described in the above method embodiments when being executed by the processor 1801. The computer program 1803 may be solidified in the processor 1801, in which case the processor 1801 may be implemented by hardware.

In an implementation, the communication device 1800 may include circuits. The circuits are used to implement the transmitting, receiving or communicating function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the descriptions of the above embodiment may be a network device or a UE, but the scope of the communication device described in the disclosure is not limited thereto, and the structure of the communication device is not limited by FIG. 7. The communication device may be a stand-alone device or may be part of a larger device. For example, the communication device may be:
(1) a stand-alone IC, chip, chip system or subsystem;
(2) a collection of ICs including one or more ICs, in an embodiment of the disclosure, the collection of ICs may also include storage components for storing data and computer programs;
(3) an ASIC, such as a modem;
(4) modules that can be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case that the communication device is a chip or a chip system can refer to the schematic structural diagram of a chip shown in FIG. 8. The chip shown in FIG. 8 includes a processor 1901 and an interface 1902. There may be one or more processors 1901, and there may be a plurality of interfaces 1902.

In an embodiment of the disclosure, the chip also includes a memory 1903 for storing necessary computer programs and data.

It is understandable by those skilled in the art that various illustrative logical blocks and steps listed in the embodiments of the disclosure may be implemented by an electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium for storing instructions. When the instructions are executed by a computer, the function of any of the above method embodiments is implemented.

The disclosure also provides a computer program product. When the computer program product is executed by a computer, the function of any of the above method embodiments is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs)) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "a plurality of" may be two, three, four or more, which is not limited in the disclosure. In the embodiment of the disclosure, for a type of technical features, "first", "second" and "third", and "A", "B", "C" and "D" are used to distinguish different technical features of the type, the technical features described using "first", "second" and "third", and "A", "B", "C" and "D" do not indicate any order of precedence or magnitude.

As used herein, the terms "machine-readable medium" and "computer-readable medium" refer to any computer program product, device, and/or apparatus (e.g., a disk, a compact disc, a memory, a programmable logic device (PLD)) used to provide machine instructions and/or data to a programmable processor, including machine-readable medium that receives machine instructions as machine-readable signals. The term "machine-readable signal" refers to any signal used to provide machine instructions and/or data to the programmable processor.

The systems and technologies described herein can be implemented in a computing system that includes back-end components (for example, a data server), or a computing system that includes middleware components (for example, an application server), or a computing system that includes front-end components (for example, a user computer with a graphical user interface or a web browser, through which the user can interact with the implementations of the systems and technologies described herein), or a computing system that includes any combination of such back-end components, middleware components, and front-end components. The components of the system may be interconnected by any form or medium of digital data communication (e.g., a communication network). The communication network may include, for example, a local area network (LAN), a wide area network (WAN), and the Internet.

The computer system may include a client and a server. The client and the server are generally remote from each other and interact through a communication network. The client-server relation is generated by computer programs running on the respective computers and having a client-server relation with each other.

It is understandable that the steps can be reordered, added or deleted using various forms of the processes shown above. For example, the steps in the disclosure may be performed in parallel, sequentially or in different orders, as long as the desired results of the technical solutions disclosed in the disclosure are achieved, which are not limited herein.

In addition, it should be understood that each embodiment of the disclosure may be implemented independently or in combination with other embodiments if the solution permits.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can refer to the corresponding processes in the above method embodiments, which will not be repeated herein.

The above are only specific implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A communication processing method, performed by a terminal, comprising:
receiving parameter information corresponding to at least one uplink power control parameter identifier respectively associated with a first reference signal identifier (qnew) and/or a second qnew, wherein the first qnew is determined from a first candidate beam reference signal set, the second qnew is determined from a second candidate beam reference signal set, the first qnew indicates a beam and a path loss reference signal corresponding to a transmission of a first channel and/or a first reference signal, and the second qnew indicates a beam and a path loss reference signal corresponding to a transmission of a second channel and/or a second reference signal; and
based on parameter information corresponding to a first uplink power control parameter identifier, determining uplink power control parameter information of at least one of:
the first channel, the first reference signal, the second channel, or the second reference signal.

2. The method of claim 1, wherein the first uplink power control parameter identifier is a minimum uplink power control parameter identifier.

3. The method of claim 1 or 2, further comprising:
receiving first configuration information, wherein the first configuration information is used for configuring the first candidate beam reference signal set and the second candidate beam reference signal set, the first candidate beam reference signal set corresponds to a first failure detection resource set, and the second candidate beam reference signal set corresponds to a second failure detection resource set.

4. The method of claim 3, further comprising:
receiving indication information, wherein the indication information is used for determining a first unified transmission configuration indication (TCI) state and a second unified TCI state.

5. The method of claim 4, wherein the first unified TCI state or the second unified TCI state comprises at least one of:
a Joint TCI State;
a Downlink (DL) TCI State; or
an Uplink (UL) TCI State.

6. The method of claim 4 or 5, further comprising:
determining the first failure detection resource set and the second failure detection resource set based on at least one of:
receiving second configuration information, wherein the second configuration information indicates the first failure detection resource set and the second failure detection resource set; or
determining the first failure detection resource set based on a TCI state of a control resource set (CORESET) corresponding to a first CORESET pool index (CORESETPoolIndex), and determining the second failure detection resource set based on a TCI state of a CORESET corresponding to a second CORESETPoolIndex, wherein at least two CORESETs are configured with different CORESETPoolIndexes.

7. The method of claim 4 or 6, wherein the first failure detection resource set comprises reference signal resources corresponding to the first unified TCI state, and the second failure detection resource set comprises reference signal resources corresponding to the second unified TCI state.

8. The method of claim 4, wherein the indication information comprises a medium access control control element (MAC CE), at least one unified TCI state indicated by the MAC CE corresponds to a code point in a TCI state indication field carried in DL control information (DCI).

9. The method of claim 4, wherein the indication information comprises a MAC CE and DCI, the MAC CE indicates at least one unified TCI state respectively corresponding to a plurality of code points corresponding to a TCI state indication field carried in the DCI, and the TCI state indication field carried in the DCI indicates one of the plurality of code points.

10. The method of claim 1, wherein the first channel comprises at least one of:
a first physical UL shared channel (PUSCH); or
a first physical UL control channel (PUCCH);
the first reference signal comprises a first sounding reference signal (SRS);
the second channel comprises at least one of:
a second PUSCH; or
a second PUCCH; and
the second reference signal comprises a second SRS.

11. The method of claim 10, wherein an UL power control parameter of the first PUSCH or the second PUSCH comprises at least one of:
a first power parameter, a second power parameter or a power control adjustment state of the first PUSCH or the second PUSCH.

12. The method of claim 10, wherein an UL power control parameter of the first PUCCH or the second PUCCH comprises at least one of:
a first power parameter or a power control adjustment state of the first PUCCH or the second PUCCH.

13. The method of claim 10, wherein an UL power control parameter of the first SRS or the second SRS comprises at least one of:
a first power parameter or a second power parameter of the first SRS or the second SRS, or a power control adjustment state of the first PUSCH or the second PUSCH.

14. The method of claim 1, further comprising:
sending a scheduling request for beam failure recovery; and/or
sending a PUSCH, wherein the PUSCH carries an UL MAC CE, and the UL MAC CE indicates the first qnew and/or the second qnew, and at least one of:
an identifier of a first failure detection resource set;
an identifier of the first candidate beam reference signal set;
a first CORESETPoolIndex;
an identifier of a second failure detection resource set;
an identifier of the second candidate beam reference signal set; or
a second CORESETPoolIndex.

15. A communication processing method, performed by a network device, comprising:
sending parameter information corresponding to at least one uplink power control parameter identifier respectively associated with a first reference signal identifier (qnew) and/or a second qnew, wherein the first qnew is determined from a first candidate beam reference signal set, the second qnew is determined from a second candidate beam reference signal set, the first qnew indicates a beam and a path loss reference signal corresponding to a transmission of a first channel and/or a first reference signal, and the second qnew indicates a beam and a path loss reference signal corresponding to a transmission of a second channel and/or a second reference signal;
wherein parameter information corresponding to a first uplink power control parameter identifier is used to determine uplink power control parameter information of at least one of:
the first channel, the first reference signal, the second channel, or the second reference signal.

16. The method of claim 15, wherein the first uplink power control parameter identifier is a minimum uplink power control parameter identifier.

17. The method of claim 15, further comprising:
sending first configuration information, wherein the first configuration information is used for a terminal to configure the first candidate beam reference signal set and the second candidate beam reference signal set, the first candidate beam reference signal set corresponds to a first failure detection resource set, and the second candidate beam reference signal set corresponds to a second failure detection resource set.

18. The method of claim 17, further comprising:
sending indication information, wherein the indication information is used for determining a first unified transmission configuration indication (TCI) state and a second unified TCI state.

19. The method of claim 18, wherein the first unified TCI state or the second unified TCI state comprises at least one of:
a Joint TCI State;
a Downlink (DL) TCI State; or
an Uplink (UL) TCI State.

20. The method of claim 18, further comprising:
sending second configuration information, wherein the second configuration information indicates the first failure detection resource set and the second failure detection resource set.

21. The method of claim 18, wherein the first failure detection resource set comprises reference signal resources corresponding to the first unified TCI state, and the second failure detection resource set comprises reference signal resources corresponding to the second unified TCI state.

22. The method of claim 18, wherein the indication information comprises a medium access control control element (MAC CE), at least one unified TCI state indicated by the MAC CE corresponds to a code point in a TCI state indication field carried in DL control information (DCI).

23. The method of claim 18, wherein the indication information comprises a MAC CE and DCI, the MAC CE indicate at least one unified TCI state respectively corresponding to a plurality of code points corresponding to a TCI state indication field carried in the DCI, and the TCI state indication field carried in the DCI indicates one of the plurality of code points.

24. The method of claim 15, wherein the first channel comprises at least one of:
a first physical UL shared channel (PUSCH); or
a first physical UL control channel (PUCCH);
the first reference signal comprises a first sounding reference signal (SRS);
the second channel comprises at least one of:
a second PUSCH; or
a second PUCCH; and
the second reference signal comprises a second SRS.

25. The method of claim 24, wherein an UL power control parameter of the first PUSCH or the second PUSCH comprises at least one of:
a first power parameter, a second power parameter or a power control adjustment state of the first PUSCH or the second PUSCH.

26. The method of claim 24, wherein an UL power control parameter of the first PUCCH or the second PUCCH comprises at least one of:
a first power parameter or a power control adjustment state of the first PUCCH or the second PUCCH.

27. The method of claim 24, wherein an UL power control parameter of the first SRS or the second SRS comprises at least one of:
a first power parameter or a second power parameter of the first SRS or the second SRS, or a power control adjustment state of the first PUSCH or the second PUSCH.

28. The method of claim 15, further comprising:
receiving a scheduling request for beam failure recovery; and/or
receiving a PUSCH, wherein the PUSCH carries an UL MAC CE, and the UL MAC CE indicates the first qnew and/or the second qnew, and at least one of:
an identifier of a first failure detection resource set;
an identifier of the first candidate beam reference signal set;
a first CORESETPoolIndex;
an identifier of a second failure detection resource set;
an identifier of the second candidate beam reference signal set; or
a second CORESETPoolIndex.

29. A communication processing apparatus, applied to a terminal, comprising:
a first communication module, configured to receive parameter information corresponding to at least one uplink power control parameter identifier respectively associated with a first reference signal identifier (qnew) and/or a second qnew, wherein the first qnew is determined from a first candidate beam reference signal set, the second qnew is determined from a second candidate beam reference signal set, the first qnew indicates a beam and a path loss reference signal corresponding to a transmission of a first channel and/or a first reference signal, and the second qnew indicates a beam and a path loss reference signal corresponding to a transmission of a second channel and/or a second reference signal; and based on parameter information corresponding to a first uplink power control parameter identifier, determine uplink power control parameter information of at least one of:
the first channel, the first reference signal, the second channel, or the second reference signal.

30. A communication processing apparatus, applied to a network device, comprising:
a second communication module, configured to send parameter information corresponding to at least one uplink power control parameter identifier respectively associated with a first reference signal identifier (qnew) and/or a second qnew, wherein the first qnew is determined from a first candidate beam reference signal set, the second qnew is determined from a second candidate beam reference signal set, the first qnew indicates a beam and a path loss reference signal corresponding to a transmission of a first channel and/or a first reference signal, and the second qnew indicates a beam and a path loss reference signal corresponding to a transmission of a second channel and/or a second reference signal; wherein parameter information corresponding to a first uplink power control parameter identifier is used to determine uplink power control parameter information of at least one of:
the first channel, the first reference signal, the second channel, or the second reference signal.

31. A communication device, comprising: a transceiver, a memory, and a processor connected to the transceiver and the memory, respectively, wherein the processor is configured to control wireless signal transmission and reception of the transceiver by executing computer-executable instructions on the memory, and is capable of implementing the method of any one of claims 1-28.

32. A computer storage medium, wherein the computer storage medium stores computer-executable instructions, and the computer-executable instructions, when being executed by a processor, can implement the method of any one of claims 1-28.
